# EUROPEAN PATENT APPLICATION

(11) **EP 2 538 327 A1**
(43) Date of publication of application: **26.12.2012**
(21) Application number: 12172141.9
(22) Date of filing: 15.06.2012
(51) Int. Cl.: G06F 9/46, G06F 12/00, G06F 17/30

(54) **Adaptive Termination and Pre-Launching Policy for Improving Application Startup Time**

(30) Priority: 16.06.2011 US 201113161703; 24.05.2012 KR 20120055404
(71) Applicant: Samsung Electronics Co., Ltd., Suwon-si, Gyeonggi-do, 443-742 (KR)
(72) Inventor: Xia, Bing, Richardson, TX Texas 75082 (US); Lam, Ioi Kim, Richardson, TX Texas 75082 (US)
(74) Representative: Jenkins, Richard Gavin

(57) **Abstract**

A method and device for adaptively determining processes to kill when a low memory situation is detected, and for adaptively determining processes to pre-launch, are disclosed. The method for determining processes to kill includes tracking statistics of application launching behaviors, predicting application behaviors under certain system states in accordance with the tracked statistics, detecting a certain system state, and, if the certain system state is detected, adaptively selecting an application loaded in a cache memory to kill in accordance with the predicted behaviors.

## Description

### BACKGROUND OF THE INVENTION

### Field of the Invention:

The present invention relates to a method of improving application startup time in a digital device. More particularly, the present invention relates to a method of reducing an application startup time by killing applications that have a low probability and cost to re-launch, and by pre-starting slow applications in anticipation of near future usage.

### Description of the Related Art:

A mobile terminal, such as a smartphone or a tablet computer, is typically limited in the amount of memory that may be installed due to size, weight, and price concerns. The mobile terminal may therefore attempt to execute applications which use all available memory. In operating systems such as LINUX or Android (a mobile phone operating system based on the LINUX kernel), conventional memory management techniques include selecting applications to kill based on static process information. That is, an Out Of Memory (OOM) function will monitor memory usage and will kill processes if it identifies circumstances where memory would be exhausted.

It is the job of the LINUX 'OOM Killer' to sacrifice one or more processes in order to free up memory for the system when all else fails.

The function which does the scoring of a process in the effort to find the best candidate for elimination is called badness(), which works by accumulating 'points' for each process it examines and returning them to a selection function. The process with the highest number of points is selected and eliminated, unless it is already in the midst of freeing up memory on its own.

This value is determined on the basis that the system loses the minimum amount of work done, recovers a large amount of memory, doesn't kill any innocent process using large amounts of memory, and kills the minimum number of processes (if possible, limited to killing only one process). The more memory a process uses, the more memory can be freed up by killing the process, and thus the higher the badness score. The longer a process is alive in the system, the more likely it is to be needed or desired, and thus the smaller the badness score. The ideal candidate process for killing is a recently started, non-privileged process which, together with its child processes, uses large amounts of memory, has been niced, and does no hardware Input/Output (I/O).

The Android operating system expanded the LINUS OOM Killer to have a Low Memory Killer (LMK) process. LMK considers application types and foreground state when determining a process to kill. When system memory reaches certain statistically defined thresholds, LMK chooses a process to kill. However, LMK is still based on static information.

Killing a particular process might be annoying or inconvenient to users who would have preferred that a different process to be killed. The process killed may also be important from the system's perspective. In general, it is better to avoid killing processes which the user desires or which the system requires. However, users' preferences have not generally been a factor in determining which applications to kill when addressing OOM situations in mobile terminals.

In addition to determining which applications to kill based on immediate memory needs, there is an additional concern in that there is typically significant variation in the time required to launch an application not resident in memory. OOM Killer and LMK consider only the immediate memory situation when determining which processes to kill, and do not consider the time required to launch applications. This resulting unpredictable variation in application launch times may be inconvenient or annoying to a user attempting to launch a favorite application.

Thus, for memory-constrained systems, it has been nearly impossible to choose a set of static parameters that will choose the best applications to kill.

Therefore, a need exists for a system and method for adaptively terminating processes and improving application startup times in accordance with a user's needs.

The above information is presented as background information only to help understand the present invention. Applicants have made no determination and make no assertion as to whether any of the above might be applicable as Prior Art with regard to the present application.

### SUMMARY OF THE INVENTION

Aspects of the present invention are to address at least the above-mentioned problems and/or disadvantages and to provide at least the advantages described below. Accordingly, an aspect of the present invention is to provide an apparatus and method for adaptively determining processes to kill when a low memory condition is detected.

Another aspect of the present invention is to provide an apparatus and method for pre-starting applications in anticipation of near future usage.

In accordance with an aspect of the present invention, a method for adaptively determining processes to kill when a low memory situation is detected is provided. The method includes tracking statistics of application launching behaviors, predicting application behaviors under certain system states in accordance with the tracked statistics, detecting a certain system state, and, if the certain system state is detected, adaptively selecting an application loaded in a cache memory to kill in accordance with the predicted application behaviors and the certain system state.

In accordance with another aspect of the present invention, an apparatus for adaptively determining processes to kill when a low memory situation is detected is provided. The apparatus includes a processor for tracking statistics of application launching behaviors, predicting application behaviors under certain system states in accordance with the tracked statistics, detecting a certain system state, and, if the certain system state is detected, adaptively selecting an application loaded in a cache memory to kill in accordance with the predicted application behaviors and the certain system state.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a perspective view of a portable terminal according to the related art;
FIG. 2 is a functional block diagram illustrating the portable terminal of FIG. 1 according to the related art;
FIG. 3 is a flowchart illustrating a method for determining a process to kill, when a low memory condition is detected, according to the related art;
FIG. 4 is a flowchart illustrating a method of heuristic memory management according to an exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

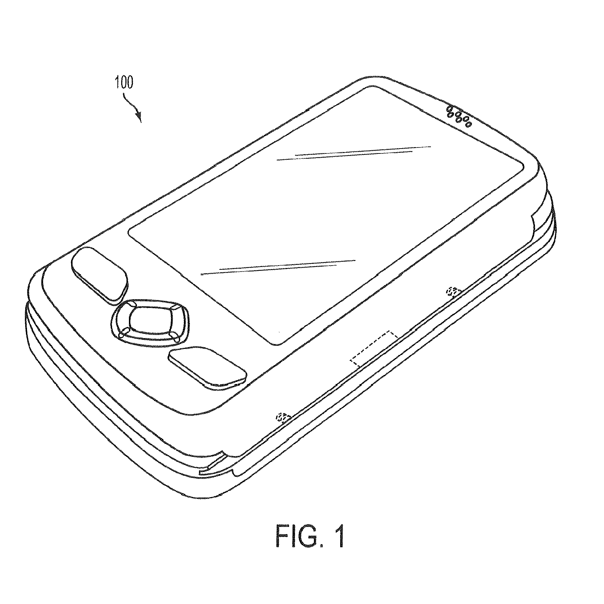

FIGs. 1 through 4, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly stated otherwise. A set is defined as a non-empty set including at least one element.

In accordance with an embodiment of the present invention, a portable terminal is an electronic device that allows for easy carriage. The term "portable terminal" covers a broad range of terminals including a video phone, a portable phone, a smart phone, an International Mobile Telecommunication 2000 (IMT-2000) terminal, a Wideband Code Division Multiple Access (WCDMA) terminal, a Universal Mobile Telecommunication System (UMTS) terminal, a Personal Digital Assistant (PDA), a Portable Multimedia Player (PMP), a Digital Multimedia Broadcasting (DMB) terminal, an e-book reader, a portable computer such as a laptop, a tablet, etc., and a digital camera.

FIG. 1 is a perspective view of a portable terminal according to the related art.

Referring to FIG. 1, a portable terminal 100 which may be embodied in a tablet computer or a smartphone, is typically limited in the memory provided. That is, the user of a portable terminal may not be able to expand or augment the installed memory on the device. Each system application and user application stored or running on the device requires memory. Thus, a user running applications that use enough total memory may encounter a condition where the device has insufficient free memory to allocate for running additional applications. When the operating system runs out of free memory in this manner, it will determine an application or process to kill in order to make available memory that the killed process had been using.

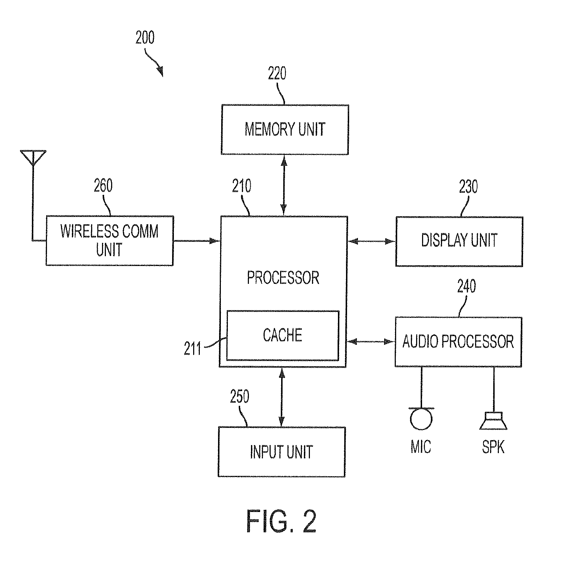

FIG. 2 is a functional block diagram illustrating the portable terminal of FIG. 1 according to the related art.

Referring to FIG. 2, a portable terminal 200 includes a processor 210 and a memory unit 220. The memory unit 220 stores both executable code and data. The executable code may include both system software such as an operating system, and user applications. The processor 210 also includes a cache memory 211. The cache memory 211 is where application software is loaded when executed. The processor 210 can access the cache memory 211 much faster than the memory unit 220, but the cache memory 211 has a much smaller capacity than the memory unit 220.

The portable terminal typically includes a display unit 230, an audio processor 240, and an input unit 250. The input unit 250 and display unit 230 may be combined as a single unit, for example, a touch screen. The audio processor 240 uses a microphone MIC for audio input and a speaker SPK for audio output. The portable terminal may also be configured to include a wireless communication unit 260.

When an application executes on the portable terminal, the application has cache memory allocated for its use, and then the program is loaded into the cache memory. Typically, the applications in the storage memory occupy far more memory space than is available in the cache memory. Therefore, the operating system includes a Memory Management (MM) function to allocate cache memory when an application requires it. The MM will also de-allocate cache memory that an application no longer requires, so that the cache memory can be made free and available for other programs to use.

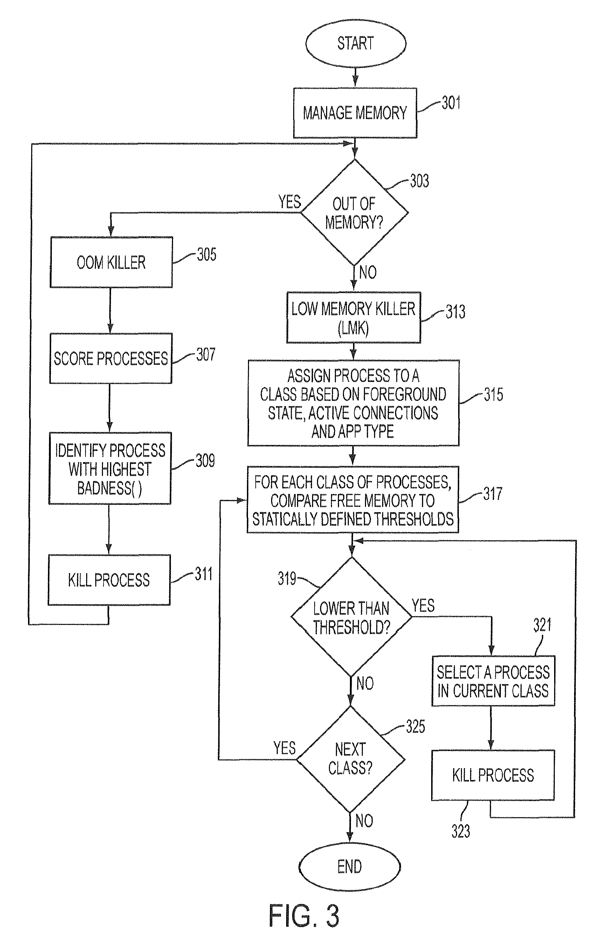

FIG. 3 is a flowchart illustrating a method for determining a process to kill, when a low memory condition is detected, according to the related art.

Referring now to FIG. 3, an Out Of Memory (OOM) Killer process as implemented in LINUX is described. In step 301, the MM manages the memory, allocating and de-allocating memory as required, and monitors the amount of free cache memory available. An application may request allocation of more cache memory than is free, and the system must detect if it is out of memory at step 303. If an out of memory condition is determined at step 303, the OOM Killer is invoked at step 305.

The OOM Killer chooses processes to kill, and thereby to free up cache memory. The OOM Killer chooses the processes to kill based on static information. At step 307, a function which does the actual scoring of a process in the effort to find the best candidate for elimination calculates a badness() score for a process. Badness() determines a numerical score to determine which processes are the best candidate for elimination. A higher badness() score means a process is more likely to be killed than a process having a lower badness() score.

Certain criteria guide the calculation of badness(). A process has a higher badness() score, and therefore is a better candidate for killing, if:
1) A minimum amount of work done is lost. Killing a process means whatever work it may have been doing will be lost.
2) A large amount of memory is recovered. That is, it is preferable to kill a process that gives a higher probability of resolving the low memory condition. If a process uses a large amount of memory, killing it will free up that memory.
3) Processes innocent of using large amounts of memory are not killed. This is related to both 1) and 2) above. If a process is not using too much memory, then the problem of losing its work is avoided by not killing that process.
4) A minimum necessary number of processes are killed. Preferably, only one process is killed.
5) It is preferable to try to kill a process that the user expects to be killed. In this situation, the user needs the memory allocated for a new process, and expects the operating system to continue to function properly. Therefore, it is preferable to select a process to kill that the user is unlikely to regret losing.

The badness() score of each process is calculated at step 307, and a process with a highest badness() score is determined at step 309. The method kills the process that has the highest score at step 311. The method may then continue and return to step 303. If the out of memory condition persists, the method is repeated to kill another process, repeatedly until the out of memory condition is alleviated.

If an out of memory condition is not determined at step 303, then the method proceeds to execute the Low Memory Killer (LMK) at step 313.

At step 315, each process is assigned to a class based on its foreground state, active connections, and application type. After each process is assigned to a class, at step 317 the method compares free memory to statically defined thresholds for each class of processes.

If it is determined at step 319 that free memory is lower than the threshold for the class, then the method selects a process to kill from the current class at step 321 and kills the selected process at step 323. The method then returns to step 319 to determine whether killing the process resulted in free memory being above the threshold.

If it is determined at step 319 that the free memory is not lower than the threshold level for the class, then the method determines at step 325 whether another class remains. If it is determined that another class remains, the method returns to step 317. If it is determined that there are no remaining classes, the process ends.

The badness() score starts with the amount of memory the process is using. The independent memory size of any child process (except a kernel thread) is added to the score, as processes which fork many child processes are likely good choices for killing. Niced processes are most likely less important, so their scores are increased. Long-running processes are likely to be more important, so their scores are decreased. Superuser processes are likely to be more important, so their scores are decreased. Processes with direct access to hardware are more likely to be important and killing them could mess up the hardware, so their scores are decreased. So the ideal candidate for liquidation is a recently started, non-privileged process which together with its children uses lots of memory, has been niced, and performs no raw Input/Output (I/O).

The Android operating system modifies the above in that the OOM killer does not kick in until late in the low memory situation, i.e., when all the cache memory is allocated. Android introduced the "lowmemory" driver, which has multiple thresholds of low memory. In a low-memory situation, when the first thresholds are met, background processes are notified of the problem. They do not exit, but, instead, save their state. This affects the latency when switching applications, because the application has to reload on activation. On further pressure, the lowmemory killer kills the non-critical background processes whose state had been saved in the previous threshold and, finally, kills the foreground applications if necessary.

The determination of a process to kill as described above can result in killing a process that is other than optimal according to the user's desires. Further, determining a process to kill as described above can result in a user later desiring to use an application and being frustrated if the application is not loaded in the cache and has a significant launch time to load and start up.

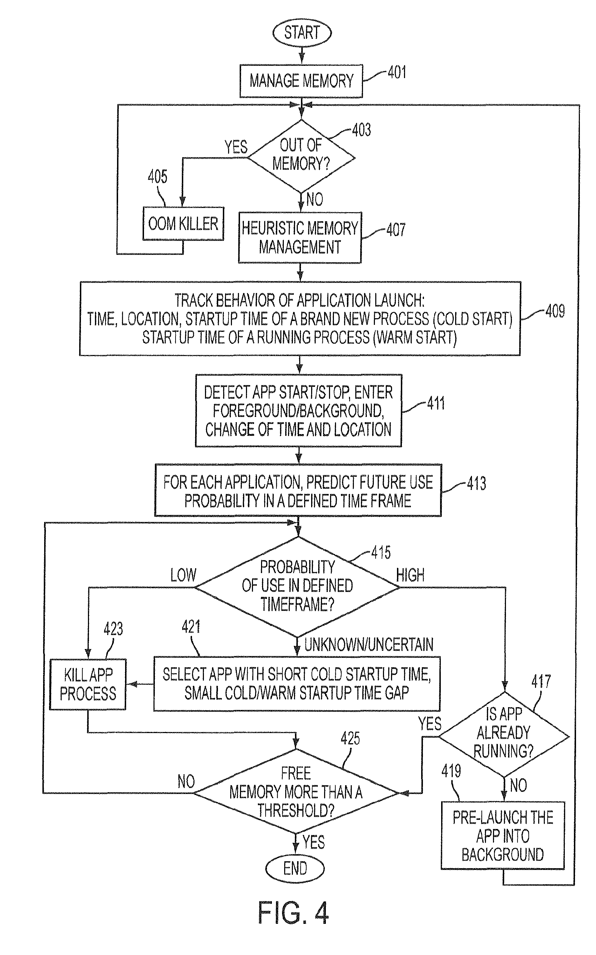

FIG. 4 is a flowchart illustrating a method of heuristic memory management according to an exemplary embodiment of the present invention.

Referring to FIG. 4, at step 401, the exemplary embodiment manages memory and at step 403, determines whether an out of memory condition is detected. These are the same as steps 301 and 303 of FIG. 3, described above.

If an out of memory condition is detected, the OOM killer is invoked at step 405. This is the same as steps 305-311 of FIG. 3, described above. The method then returns to step 403.

If the out of memory condition is not detected, then an exemplary embodiment of the present invention invokes heuristic memory management at step 407. At step 409, the exemplary embodiment tracks statistics of application launching behavior. That is, when an application launches, measurements are recorded of various data, which may include, for example, one or more of the warm startup time for an application loaded in cache, the cold startup time for an application which was not loaded in cache, the amount of memory used by the application, how often the application is used, the time of day when the application is launched, the Geo-location where the application is launched, a Global Positioning System (GPS) detected movement such as when traveling, and a Bluetooth connection to particular peripheral devices. The cold startup time statistics may include information of the time it takes for an application from launch in a new process to be able to serve external requests, such as user interaction or external process communication. The warm startup time statistics may include information of the time it takes for an application that was already running in a background process to come to the foreground.

At step 411 the exemplary embodiment detects whether an application starts, stops, enters the foreground, or enters the background. The exemplary embodiment further detects context information, such as a change of time or location.

Using the collected information, the exemplary embodiment predicts a probability of future use within a predefined timeframe for each application at step 413. For example, it may predict that an application is more or less likely to be launched in the near future and/or at the current location. This exemplary embodiment of the present invention may also predict an expected spread between cold and warm startup times, given a current system load and the application's past behavior. In this exemplary embodiment, the timeframe is preset to a value by the system, and the user can adjust it from the settings user interface.

At step 415, the exemplary embodiment evaluates the probability of applications being used within the predetermined timeframe. Applications currently running, or with active connections, are considered to have a high probability of future use. The evaluation may use pattern recognition algorithms to analyze past application usage data collected in steps 409 and 411. The present inventors do not consider the algorithms to comprise part of the novelty of the present application, and so a detailed description thereof is omitted herein. That is, various algorithms to evaluate the probability of applications being used in the predetermined timeframe can be used in step 413 without departing from the spirit or scope of the present invention.

In an exemplary embodiment, the user may further choose to explicitly provide rules for particular applications. For example, the user may specify that a "Maps" application has a high probability of use when leaving the office. Leaving the office may be defined, for example, by a combination of the date (not a weekend or holiday), the time of day, and the present location.

If it is determined that there is a high probability of an application being used within the predefined timeframe, the method determines at step 417 whether the application is already running. If the application is already running, the method proceeds to determine whether free memory is above a threshold level at step 425. If the application is not already running, the exemplary embodiment pre-launches the application in the background at step 419, and then returns to step 403.

If it is determined that there is a low probability of the application being used within the predefined timeframe, the exemplary embodiment kills the application process at step 423, and then proceeds to step 425.

If the probability of the application being used within the predefined timeframe is unknown or uncertain, then the exemplary embodiment at step 421 selects an application with a short cold startup time and/or a small time gap between cold and warm startup times. The exemplary embodiment then proceeds to kill the selected process at step 423. An unknown or uncertain probability may result, for example, when not enough usage data has been gathered, or when there are no applicable patterns recognized in the gathered data. A system or user defined threshold may be used to determine whether a startup time is considered to be "short". For example, a cold startup time faster than a threshold time of one second may be considered to be "short". If a background application can startup from a new process within the threshold time, the process is a candidate to be killed. Similarly, if a cold/warm startup time difference is less than the threshold, then the process is a candidate to be killed.

At step 425 it is determined whether the free memory is more than a threshold level. If free memory is more than the threshold level, the method ends. If free memory is not more than the threshold level, then the process returns to step 415. In an exemplary embodiment, the free memory threshold is preset by the system, and can be adjusted by the user through the settings user interface.

In an exemplary embodiment, if the free memory threshold is set to zero, then only applications that are in the foreground or have active connections, or have a high probability of future use, will remain in memory. Other applications and their processes will be killed. The steps of Figs. 3 and 4 are performed by the processor 210.

Thus, an exemplary embodiment of the present invention uses the statistics of past application behavior to discriminate among applications, so that an application that the user is more likely to desire to use in the near future and/or in the present context will have a lower score than an application that the user is less likely to desire to use in the near future and/or in the present context.

If free memory is not above the threshold level, the exemplary embodiment selects an application to kill that has a relatively lower probability of re-launching in the near future and/or at the present location.

An exemplary embodiment of the present invention also considers a spread between a warm startup time to launch when an application is loaded in the cache, and a cold startup time to launch when an application is not loaded in the cache. If this spread is relatively small, the user is not as likely to be inconvenienced by the process being killed. In contrast, if the spread between the cold and warm startup times is relatively large, the increased cold startup time may be very noticeable and annoying to the user. Therefore, this exemplary embodiment of the present invention scores an application with a small startup time spread higher relative to an application with a large startup time spread. That is, it selects an application to kill that has a relatively smaller cold and warm startup time spread than other applications have.

Similarly, if an application is determined to have a short cold startup time, then the user is not as likely to be inconvenienced by the process being killed. In contrast, if the cold startup time is relatively large, waiting as long as the startup time may be very noticeable and annoying to the user. Therefore, this exemplary embodiment of the present invention scores an application with a small startup time higher relative to an application with a large startup time. That is, it selects an application to kill that has a relatively smaller cold startup time than other applications have.

After the processes in the cache memory are scored in accordance with an exemplary embodiment of the present invention, the method selects a process to kill with a highest score.

By using the above described exemplary implementation of the present invention, a user's habits of launching applications and the applications' behaviors at startup are used to modify the selection of a process to kill in a low memory situation, so that applications that the user is more likely to use at a particular time and/or place and that would have a more noticeable difference between cold and warm startup times are less likely to be selected to be killed than applications that the user is less likely to use at that time and/or location or that have relatively less noticeable differences between their cold and warm startup times.

That is, applications that are more likely to need to be loaded in the cache, and more likely to benefit from being loaded in the cache, are less likely to be selected for killing. Thus, this exemplary embodiment adaptively modifies the termination policy for killing processes in a low memory situation according to the user's history of using the applications and the applications' detected startup behaviors.

For example, if an application is predicted to have a relatively large warm-cold startup time spread, is launched frequently, is predicted to be more likely to be launched at a near future time of day, or is predicted to be more likely to be launched at a present geolocation, then the application's score may be decreased accordingly, thereby reducing a probability of the application being selected for killing.

An exemplary embodiment of the present invention compares the predicted behaviors to information of the present time and/or location. If it is determined that an application is more likely to be launched in the near future and/or at the present location, and that the application is likely to have a relatively larger difference between warm and cold startup times, then this exemplary embodiment of the present invention will attempt to pre-load the application into the cache. If the cache memory is available, this exemplary embodiment will load the application into the cache accordingly.

Thus, this exemplary embodiment adaptively modifies a preloading policy for loading applications in cache memory according to the user's history of using the applications and the applications' detected startup behaviors.

For example, if an application is predicted to have a relatively large warm-cold startup time spread, is launched frequently, is predicted to be more likely to be launched at a near future time of day, or is predicted to be more likely to be launched at a present geolocation, then the application's may be selected for pre-launching in anticipation of probable near future use. The wait time of a user after launching the application may thereby be decreased accordingly, thereby improving the user's use of the applications in a manner adaptively determined in accordance with the user's history and with a present context of the device.

Certain aspects of the present invention can also be embodied as computer readable code on a computer readable recording medium. A computer readable recording medium is any data storage device that can store data which can be thereafter read by a computer system. Examples of the computer readable recording medium include Read-Only Memory (ROM), Random-Access Memory (RAM), CD-ROMs, magnetic tapes, floppy disks, and optical data storage devices. The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for adaptively determining processes to kill when a low memory situation is detected, the method comprising:
tracking statistics of application launching behaviors;
predicting application behaviors under certain system states in accordance with the tracked statistics;
detecting a certain system state; and
if the certain system state is detected, adaptively selecting an application loaded in a cache memory to kill in accordance with the predicted application behaviors and the certain system state.

2. The method of claim 1, wherein the application launching behaviors comprise a startup time of a cold launch of an application when not loaded in the cache memory.

3. The method of claim 2, further comprising, if the startup time of the cold launch of the application is relatively longer than a startup time of a cold launch of another application, reducing a probability of killing the application comprising the relatively longer startup time in comparison to a probability of killing the other application comprising the relatively shorter startup time.

4. The method of claim 3, wherein the application launching behaviors further comprise a startup time of a warm launch of an application loaded in a cache.

5. The method of claim 4, wherein the application launching behaviors further comprise a cold and warm startup time spread in accordance with a current system load.

6. The method of claim 5, further comprising, if the cold and warm startup time spread of the application is relatively longer than a cold and warm startup time spread of the other application, reducing a probability of killing the application comprising the relatively longer cold and warm startup time spread in comparison to a probability of killing the other application comprising the relatively shorter cold and warm startup time spread.

7. The method of claim 1, wherein the application launching behaviors comprise one or more of a cache memory usage of an application, a frequency of launching of the application, a time of day of a launch of the application, and a geolocation of a device launching the application.

8. The method of claim 7, wherein the predicting comprises determining a probability of the application being launched in a near future time based on one or more of the tracked frequency of the launch, time of day of the launch, and geolocation of the device.

9. The method of claim 8, further comprising, if the predicted probability of the application being launched in the near future is relatively higher than a predicted probability of another application being launched in the near future, reducing a probability of killing the application comprising the relatively higher predicted probability of being launched in the near future in comparison to a probability of killing the other application comprising the relatively lower predicted probability of being launched in the near future.

10. The method of claim 1, further comprising, selecting an application to be load into a cache memory in accordance with the predicted application behaviors and the certain system state, and pre-launching the selected application.

11. An apparatus for adaptively determining processes to kill when a low memory situation is detected, the apparatus comprising:
a processor for tracking statistics of application launching behaviors, predicting application behaviors under certain system states in accordance with the tracked statistics, detecting a certain system state, and if the certain system state is detected, adaptively selecting an application loaded in a cache memory to kill in accordance with the predicted application behaviors and the certain system state.

12. The apparatus of claim 11, wherein the application launching behaviors comprise a startup time of a cold launch of an application when not loaded in the cache memory.

13. The apparatus of claim 12, wherein, if the startup time of the cold launch of the application is relatively longer than a startup time of a cold launch of another application, the processor reduces a probability of killing the application comprising the relatively longer startup time in comparison to a probability of killing the other application comprising the relatively shorter startup time.

14. The apparatus of claim 13, wherein the application launching behaviors further comprise a startup time of a warm launch of an application loaded in a cache.

15. The apparatus of claim 14, wherein the application launching behaviors further comprise a cold and warm startup time spread in accordance with a current system load.

16. The apparatus of claim 15, wherein, if the cold and warm startup time spread of the application is relatively longer than a cold and warm startup time spread of the other application, the processor reduces a probability of killing the application comprising the relatively longer cold and warm startup time spread in comparison to a probability of killing the other application comprising the relatively shorter cold and warm startup time spread.

17. The apparatus of claim 11, wherein the application launching behaviors comprise one or more of a cache memory usage of an application, a frequency of launching of the application, a time of day of a launch of the application, and a geolocation of a device launching the application.

18. The apparatus of claim 17, wherein the processor determines a probability of the application being launched in a near future time based on one or more of the tracked frequency of the launch, time of day of the launch, and geolocation of the device.

19. The apparatus of claim 18, wherein, if the predicted probability of the application being launched in the near future is relatively higher than a predicted probability of another application being launched in the near future, the processor reduces a probability of killing the application comprising the relatively higher predicted probability of being launched in the near future in comparison to a probability of killing the other application comprising the relatively lower predicted probability of being launched in the near future.

20. The apparatus of claim 11, wherein the processor selects an application to be load into a cache memory in accordance with the predicted application behaviors and the certain system state, and pre-launches the selected application.
